# EUROPÄISCHE PATENTSCHRIFT

(11) **EP 3 246 211 B1**
(45) Veröffentlichungstag und Bekanntmachung des Hinweises auf die Patenterteilung: **17.07.2019**
(21) Anmeldenummer: 16170525.6
(22) Anmeldetag: 20.05.2016
(51) Int. Cl.: B60R 3/02, B61D 23/02

(54) **SCHIEBETRITT FÜR EIN FAHRZEUG, INSBESONDERE FÜR EIN SCHIENENFAHRZEUG**
SLIDING STEP FOR A VEHICLE, IN PARTICULAR FOR A RAIL VEHICLE
MARCHEPIED ESCAMOTABLE POUR UN VEHICULE, EN PARTICULIER UN VEHICULE FERROVIAIRE

(43) Veröffentlichungstag der Anmeldung: 22.11.2017
(73) Patentinhaber: Gebr. Bode GmbH & Co. KG, 34123 Kassel (DE)
(72) Erfinder: Löwer, Dirk, 34125 Kassel (DE)
(74) Vertreter: Patentanwälte Bauer Vorberg Kayser

(56) Entgegenhaltungen:
- WO-A1-2013/090920
- DE-A1-102008 061 852
- DE-U1-202007 000 912
- KR-A- 20110 099 552
- KR-B1- 101 603 984

## Beschreibung

Die Erfindung betrifft einen Schiebetritt für ein Fahrzeug gemäß dem Oberbegriff des Anspruchs 1. Der Schiebetritt eignet sich insbesondere zur Verwendung in einem Schienenfahrzeug und umfasst eine Trittkassette und einen innerhalb der Trittkassette verfahrbar gelagerten Ausschub, wobei der Ausschub wenigstens eine Trittstufe aufweist und zwischen einer Gebrauchsstellung und einer Ruhestellung verfahrbar ist.

Derartige Schiebetritte (siehe z.B. die gattungsbildende KR 2011 0099552 A) werden bei Fahrzeugen des öffentlichen Personenverkehrs üblicherweise im Bereich der Türen eingesetzt, um Personen an Haltestellen das Ein- und Aussteigen zu erleichtern und sicherer zu gestalten. So können ausfahrbare Trittstufen dazu genutzt werden, um einen horizontalen und/oder vertikalen Abstand zwischen der Türöffnung und einem Bahnsteig zu überbrücken. Ausschübe mit Trittstufen werden somit wiederholt ein- und ausgefahren, was mit verschiedenen Arten von Antrieben durchgeführt werden kann.

Da solche Trittstufen durch eine Öffnung aus dem Fahrzeug herausgefahren werden, sind sie verstärkt den äußeren Witterungseinflüssen ausgesetzt. Ferner stellt diese Öffnung einen Eintrittspunkt für Schmutz, Feuchtigkeit, Kälte oder sogar Schnee dar. Insbesondere im Wintereinsatz kann sich Flugschnee ansammeln und zwischen bewegte Teile setzen. Auch die Antriebseinheit selbst und/oder eine Steuereinheit zur Ansteuerung des Schiebetritts können so negativ beeinträchtigt werden.

Dabei ist es bekannt, einen Schiebetritt so aufzubauen, dass eine Trittstufe wie eine Schublade innerhalb einer Trittkassette verfahrbar ist. Die Trittkassette weist eine frontseitige Öffnung auf, durch welche die Trittstufe ein- und ausgefahren werden kann. Um das Eindringen von Schmutz und Feuchtigkeit in die Trittkassette zu verhindern, sind an dieser frontseitigen Öffnung oftmals Dichtungen und/oder Bürsten vorgesehen.

Auch bauliche Maßnahmen wurden bereits vorgeschlagen, um bewegliche Teile und insbesondere einen Antrieb von den Einflüssen der Umgebung abzuschirmen. Beispielsweise offenbart die deutsche Patentanmeldung DE 10 2011 120 481 A1 eine Schiebetrittanordnung, bei der ein Antrieb in einem hinteren Gehäuse untergebracht ist, das von einem vorderen Gehäuse getrennt ist, innerhalb dessen eine Trittstufe ein- und ausfahrbar ist. Für eine Verbindung zwischen Antrieb und Trittstufe sind zwei Verbindungsstangen vorgesehen, welche durch Verbindungsöffnungen zwischen den beiden Gehäusen geführt sind. Um die beiden Gehäuse gegeneinander abzudichten, ist an den Verbindungsöffnungen jeweils eine umlaufende Dichtung vorgesehen.

Ferner sind Lösungen bekannt, bei denen seitliche Antriebseinheiten gegenüber der Umgebung abgeschottet sind. Beispielsweise offenbart die Gebrauchsmusterschrift DE 20 2007 000 913 U1 eine solche Schiebetrittanordnung.

Die DE 10 2008 061 852 B4 sieht als Lösung insbesondere gegen das Vereisen einer Trittstufe hingegen eine weitere Antriebsvorrichtung vor, deren Motorsteuerung so ausgebildet ist, dass die Trittstufe nach Ablauf einer vorgegebenen Zeitspanne wieder aus einer Gebrauchsstellung in die Ruhestellung einfährt. So soll im Wesentlichen verhindert werden, dass die Trittstufe zu lange in einem ausgefahrenen Zustand verbleibt, in dem ihre Mechanik zu lange niedrigen Temperaturen ausgesetzt sein könnte. Ferner werden unmittelbar unterhalb der Trittstufe Heizmatten vorgeschlagen.

In der o.g. KR 2011 0099552 A sind zur Bewegung der Trittstufe durch die darin offenbarte Trennwand Antriebsmittel geführt, wobei die Trittstufe in der Ruhestellung des Ausschubs mit der Trennwand mittelbar über Federn verbunden ist.

Aufgabe der Erfindung ist es, einen Schiebetritt bereitzustellen, der auf einfache und dauerhafte Weise den Schutz einer Antriebseinheit vor äußeren Witterungseinflüssen ermöglicht.

Erfindungsgemäß wird diese Aufgabe durch einen Schiebetritt gemäß dem unabhängigen Anspruch 1 gelöst. Vorteilhafte Weiterbildungen dieses Schiebetritts ergeben sich aus den Unteransprüchen 2-12. Anspruch 13 gibt ein zugehöriges Fahrzeug mit einem solchen Schiebtritt an.

Der erfindungsgemäße Schiebetritt für ein Fahrzeug eignet sich insbesondere für ein Schienenfahrzeug. Er kann jedoch auch für andere Fahrzeuge verwendet werden. Der Schiebetritt umfasst dabei eine Trittkassette und einen innerhalb der Trittkassette verfahrbar gelagerten Ausschub. Der Ausschub weist wenigstens eine Trittstufe auf und ist zwischen einer Gebrauchsstellung und einer Ruhestellung verfahrbar, wobei die Trittstufe durch eine Ausschuböffnung an einer Vorderseite der Trittkassette in diese Gebrauchsstellung verfahrbar ist. Die Gebrauchsstellung ist hierbei dadurch definiert, dass die Trittstufe in dieser Stellung in eine definierte Endlage verfahren ist, in der Personen die Trittstufe beim Halt des Fahrzeugs betreten können. Die Ruhestellung ist hingegen dadurch definiert, dass die Trittstufe vollständig in eine definierte Endlage innerhalb der Trittkassette verfahren ist, in der sich die Trittstufe beim Fahren des Fahrzeugs befinden soll. Die Trittstufe bewegt sich wenigstens zwischen diesen beiden Endlagen, die Trittstufe kann jedoch auch weitere Zwischenstellungen einnehmen.

Der Innenraum der Trittkassette ist durch wenigstens eine zwischen gegenüber liegenden Seitenwänden verlaufende Trennwand in einen rückseitigen Raum und einen vorderen Raum unterteilt. Die Trittkassette ist somit wenigstens zweigeteilt, wobei für diese Erfindung Begriffe wie "vorne", "Vorderseite" und "vordere" die Seite der Trittkassette definieren, an der sich die Ausschuböffnung zum Herausfahren der Trittstufe befindet. Begriffe wie "hinten", "Rückseite" und "rückseitig" werden hingegen für die gegenüber liegende Seite verwendet, in deren Richtung sich die Trittstufe beim Einfahren in die Trittkassette bewegt. Ferner definiert die Bewegungsrichtung der Trittstufe für diese Erfindung die Längsachse der Trittkassette.

Die Zweigeteiltheit der Trittkassette kann beispielsweise durch ein Trittkassettengehäuse mit wenigstens einer innen liegenden Trennwand realisiert werden. Diese Trennwand verläuft quer zur Längsachse der Trittkassette, d.h. quer zur Bewegungsrichtung der Trittstufe. Alternativ könnten jedoch auch zwei Gehäuse so miteinander verbunden werden, dass sich eine Trennwand zwischen den beiden Gehäusen bildet. Auch diese verläuft quer zur Bewegungsrichtung der Trittstufe.

Die Trittstufe bewegt sich dabei innerhalb des vorderen Raums, während sich ein Antrieb zur Bewegung des Ausschubs innerhalb des rückseitigen Raums befindet. Antriebsmittel zur Bewegung der Trittstufe sind erfindungsgemäß durch die Trennwand geführt. So kann der Antrieb mit dem Ausschub bzw. mit der Trittstufe verbunden werden. Die Durchführung von Antriebsmitteln durch die Trennwand kann jedoch auch aus anderen Gründen vorgesehen werden, wozu insbesondere räumliche Gründe zählen. Die Trennwand trennt die beiden sich ergebenden Räume so nicht vollständig voneinander, sondern es ist wenigstens eine Öffnung vorhanden, durch welche ein oder mehrere Antriebsmittel geführt sind. Bei diesen Antriebsmitteln kann es sich beispielsweise um Antriebsstangen, Ketten, Riemen, Profile oder sonstige Elemente handeln.

Erfindungsgemäß liegt die Trittstufe in der Ruhestellung des Ausschubs an der Trennwand an. Es findet somit ein Kontakt zwischen der Trittstufe und der Trennwand statt. So kann die Trittstufe in ihrer Ruhestellung zusammen mit der Trennwand eine möglichst dichte Abgrenzung des vorderen Raums gegenüber dem rückseitigen Raum bewirken, wobei sich die Ausgestaltungen der beiden Bauteile gegenseitig ergänzen können. Zusammen mit der Trittstufe kann die Trennwand insbesondere dichter sein als ohne Kontakt zu dieser. Vorzugsweise liegt die Trittstufe dabei mit leichtem Druck an der Trennwand an. Dies kann dadurch erreicht werden, dass der Antrieb die Trittstufe gegen die Trennwand zieht oder drückt.

In einer bevorzugten Ausführungsform der Erfindung liegt die Trittstufe in der Ruhestellung mit ihrer Rückseite an der Trennwand an. Alternativ können an der Trittstufe jedoch auch andere Anlageflächen ausgebildet sein, welche mit der Trennwand zur Anlage bringbar sind. Wenn die Erfindung im Folgenden weiter mit einer solchen Anlagefläche in Form der Rückwand beschrieben wird, ist dies daher nicht beschränkend zu verstehen.

Mit einem solchen Aufbau eines Schiebetritts ist es insbesondere möglich, mit der Trittstufe Öffnungen in der Trennwand abzudecken. Durch diese Öffnungen sind beispielsweise die ein oder mehreren Antriebsmittel geführt. Beim Stand der Technik sind derartige Öffnungen durch Umfangsdichtungen abgedichtet, um einen vorderen Raum konstant gegen einen rückseitigen Raum abzudichten. Wenn es sich bei den Antriebsmitteln um bewegliche Teile handelt, sind diese Dichtungen jedoch einem erheblichen Verschleiß ausgesetzt und müssen wiederholt ersetzt werden, um die Dichtigkeit zu gewährleisten. Ferner sind derartige Dichtungen nicht bei allen Formen von verfahrbaren Trittstufen möglich oder nur mit erhöhten Aufwand zu realisieren. Der erfindungsgemäße Aufbau ermöglicht es hingegen, eine Trennwand mit Öffnungen insbesondere für Antriebsmittel bereitzustellen, die zwar in der Gebrauchsstellung der Trittstufe nicht abgedichtet sind, jedoch in der Ruhestellung durch eine Fläche der Trittstufe abgedeckt und somit abgedichtet werden können. In einer bevorzugten Ausführungsform der Erfindung ist hierzu vorgesehen, dass die Rückseite der Trittstufe und/oder die Seite der Trennwand, welche der Trittstufe zugewandt ist, wenigstens teilweise mit einem dichtenden Material versehen sind. Bei dem dichtenden Material handelt es sich insbesondere um ein elastisches Material. Beispielsweise kann hierzu eine Gummischicht verwendet werden, aber auch andere elastische Materialien wie beispielsweise Schaumstoffe können zum Einsatz kommen. Dabei kann die Rückseite der Trittstufe vollständig oder auch nur teilweise mit dem dichtenden Material versehen sein. Das Gleiche gilt für die Seite der Trennwand, die der Trittstufe zugewandt ist.

In einer Ausführungsform der Erfindung weist der Ausschub zwei seitliche Profile auf, die an ihrer Rückseite von der Trittstufe abstehen. Der verfahrbare Ausschub ist dann im Wesentlichen U-förmig ausgebildet mit einer Trittstufe und zwei seitlichen Profilen. Bei den Profilen kann es sich beispielsweise um flache oder profilierte Platten handeln. Die Profile können jedoch auch jeweils durch mehrere Stangen oder Platten gebildet werden. Der Ausschub kann dann zwischen einer Gebrauchsstellung und einer Ruhestellung verfahrbar sein, indem diese Profile an gegenüber liegenden Seitenwänden der Trittkassette verfahrbar gelagert sind. Dies kann über ein Rollen-Schienen-System realisiert werden. Der Ausschub ist somit in dieser Ausführungsform wie eine Art Schublade in der Trittkassette verfahrbar. Die seitlichen Profile können als Antriebsmittel durch die Trennwand geführt sein, was aufgrund ihrer Anordnung nahe der Seitenwände der Trittkassette erfolgt. Dabei können die Profile auch jeweils neben einer Trennwand geführt sein, was im Sinne der Erfindung ebenfalls als "durch die Trennwand geführt" anzusehen ist.

Insbesondere können die seitlichen Profile dabei durch wenigstens eine frei liegende Querstrebe miteinander verbunden sein, um so die Stabilität und Steifigkeit des Ausschubs zu erhöhen. Die Trennwand kann dann eine Durchbrechung aufweisen, durch welche die wenigstens eine Querstrebe beim Verfahren des Ausschubs innerhalb der Trittkassette bewegbar ist. Die Querstrebe bewegt sich somit beim Verfahren der Trittstufe zwischen der Ruhestellung und der Gebrauchsstellung durch die Trennwand hindurch. Die hierfür entsprechend ausgebildete Durchbrechung in der Trennwand liegt in der Gebrauchsstellung der Trittstufe offen, wird jedoch in der Ruhestellung durch die Trittstufe abgedeckt. Sind die Rückseite der Trittstufe und/oder die Trennwand in diesem Bereich mit einem dichtenden Material versehen, so kann die Rückseite der Trittstufe die Durchbrechung dichtend verschließen.

Die Durchbrechung weist beispielsweise einen rechteckigen Öffnungsquerschnitt auf. Die Abmessungen dieses Schlitzes sind so gewählt, dass sich die Querstrebe hindurch bewegen kann, der Schlitz jedoch möglichst schmal ist. Dabei kann der Schlitz gebildet werden, indem eine obere Teilplatte vertikal beabstandet zu einer unteren Teilplatte angeordnet ist. Hierdurch ergibt sich der Schlitz zwischen den beiden Teilplatten, die zusammen die Trennwand bilden. Beide Teilplatten können mit einem dichtenden Material versehen sein.

Der Antrieb im rückseitigen Raum der Trittkassette kann beispielsweise an den seitlichen Profilen des Ausschubs angreifen, um diese zu bewegen. Es können jedoch auch andere Antriebsmittel verwendet werden. Beispielsweise können Antriebsstangen an der Rückseite der Trittstufe angreifen. Auch diese müssen oftmals durch eine Durchbrechung innerhalb der Trennwand geführt werden, die verschlossen werden kann, wenn die Trittstufe in der Ruhestellung an der Trennwand anliegt. Die Trennwand kann auch durch wenigstens zwei Teilplatten gebildet sein, die in horizontaler Richtung im Bereich eines Antriebsmittels voneinander beabstandet sind. Ein Antriebsmittel kann so zwischen den beiden Teilplatten hindurch geführt sein. So kann die Trennwand auch durch vier Teilplatten gebildet werden, die so zueinander beabstandet sind, dass sich sowohl ein horizontaler Schlitz als auch eine vertikal ausgerichtete Öffnung ergeben.

Insgesamt liegt die Trittstufe somit vorzugsweise wenigstens in einem Bereich an der Trennwand an, in dem Antriebsmittel durch die Trennwand geführt sind und/oder in dem sich eine Durchbrechung zur Durchführung einer Querstrebe eines Ausschubs erstreckt. Diese Bereiche werden in der Ruhestellung der Trittstufe durch diese abgedeckt und verschlossen, um so in dieser Ruhestellung einen abgeschlossenen rückseitigen Raum zu bilden, in dem ein Antrieb geschützt untergebracht werden kann. Dieser rückseitige Raum muss in der Gebrauchsstellung des Ausschubs nicht vollständig dicht sein, da Luft und Feuchtigkeit durch Öffnungen innerhalb der Trennwand in den Raum eindringen könnten. In der Ruhestellung ist er jedoch annähernd dicht, da die Öffnungen in der Trennwand durch die Trittstufe verschlossen werden. Sammelt sich beispielsweise Schnee auf der Oberseite der Trittstufe an, so könnte dieser beim Einfahren der Trittstufe durch Bürsten oder andere Arten von Abstreifern entfernt werden. Verbleibende Schneereste können aber in der Ruhestellung der Trittstufe nicht weiter in die Trittkassette eindringen, da die Trennwand in diesem Zustand dicht verschlossen ist und ein Eindringen von Feuchtigkeit in den rückseitigen Raum verhindert. Das Gleiche gilt für Schmutz.

So ist der Antrieb im rückseitigen Raum gut gegen Feuchtigkeit und Schmutz geschützt. Hierbei sind jedoch keine aufwändigen und verschleißanfälligen Dichtungen erforderlich, sondern die Trennwand kann auf einfache Weise ausgeführt werden. Die Trennwand könnte auch bei bereits vorhandenen Schiebetritten als ergänzende Maßnahme vorgesehen werden, ohne dass die grundsätzliche Konstruktion des Schiebetritts und sein Antriebssystem verändert werden müssten.

Ein in der Ruhestellung des Ausschubs zur Umgebung wenigstens annähernd dichter Raum kann dabei durch verschiedene Maßnahmen erreicht werden. Hierzu sind neben der Trennwand auch die übrigen Begrenzungswände der Trittkassette in diesem hinteren Bereich geschlossen und dicht ausgeführt. Hierzu kann der erfindungsgemäße Schiebetritt beispielsweise als eine vormontierte Einheit ausgebildet sein, die in der Ruhestellung des Ausschubs den annähernd dichten, rückseitigen Raum aufweist. Die vormontierte Einheit umfasst dann die Trittkassette und den darin beweglichen Ausschub, wobei die Trittkassette bereits so ausgebildet ist, dass der rückseitige Raum hinter der Trennwand dicht geschlossen ist, wenn sich der Ausschub in der Ruhestellung befindet.

In einer alternativen Ausführungsform kann der annähernd dichte rückseitige Raum in der Ruhestellung des Ausschubs erst gebildet werden, wenn der Schiebetritt in ein Fahrzeug eingebaut wird. Der rückseitige Bereich der Trittkassette ist dann an wenigstens einer Seite offen ausgeführt, wird jedoch durch ein Bauteil des Fahrzeugs verschlossen, wenn die Trittkassette in das Fahrzeug eingebaut wird. In diesem Einbauzustand des Schiebetritts liegt dann in der Ruhestellung des Ausschubs ein rückseitiger, dichter Raum vor, in dem der Antrieb untergebracht sein kann. Vorzugsweise wird der Schiebetritt hierzu unterhalb einer Tür eines Fahrzeugs angebracht. Von der Erfindung umfasst ist somit auch ein Fahrzeug, bei dem ein Schiebetritt gemäß einer Ausführungsform der Erfindung unterhalb einer Tür angebracht ist. Insbesondere handelt es sich hierbei um einen Bus oder ein Schienenfahrzeug des öffentlichen Personenverkehrs.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung einer Ausführungsform des erfindungsgemäßen Schiebetritts mit einer Trittstufe in einer teilweise ausgefahrenen Stellung;
- Fig. 2: einen Schiebetritt gemäß Fig. 1 mit der Trittstufe in der Ruhestellung;
- Fig. 3: einen schematischen Längsschnitt durch einen Schiebetritt gemäß Fig. 1 mit der Trittstufe in der Ruhestellung;
- Fig. 4: einen schematische Längsschnitt durch einen Schiebetritt gemäß Fig. 1 mit der Trittstufe in der Gebrauchsstellung;
- Fig. 5: eine schematische Aufsicht auf eine weitere Ausführungsform eines Schiebetritts mit einer Trittstufe in der Ruhestellung;
- Fig. 6: eine schematische Aufsicht auf einen Schiebetritt gemäß Fig. 5 mit der Trittstufe in der Gebrauchsstellung; und
- Fig. 7: eine schematische Seitenansicht einer Ausführungsform einer Trennwand.

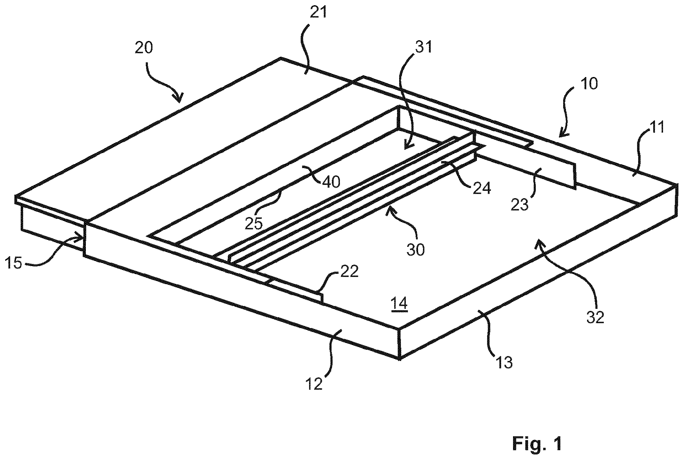

Der in Fig. 1 gezeigte Schiebetritt kann im Türbereich eines Fahrzeugs des öffentlichen Personenverkehrs angebracht sein. Bei diesem Fahrzeug kann es sich beispielsweise um einen Bus oder ein Schienenfahrzeug handeln. Aber auch für andere Arten von Schiebetritten wäre der Schiebetritt einsetzbar. Insbesondere ist der Schiebetritt dabei unterhalb einer Tür angebracht und kann dazu genutzt werden, um bei geöffneter Tür einen Abstand zu einem Bahnsteig zu überbrücken. Hierzu weist der Schiebetritt einen Ausschub 20 auf, der zwischen einer Ruhestellung und einer Gebrauchsstellung verfahrbar ist. In der Ruhestellung befindet sich der Ausschub innerhalb des Fahrzeugs, während er für die Nutzung in eine Gebrauchsstellung verfahrbar ist, in welcher er aus dem Fahrzeug herausragt.

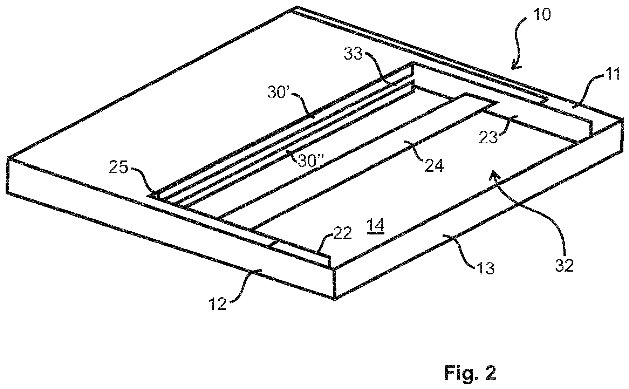

Der Ausschub 20 ist als eine Art Rollwagen ausgeführt und weist eine Trittstufe 21 auf, die innerhalb einer Trittkassette 10 verfahrbar ist. Diese Trittstufe 21 ist kasten- bzw. plattenförmig ausgebildet und dazu geeignet, dass Personen die Trittstufe 21 im ausgefahrenen Zustand betreten können. Fig. 1 zeigt die Trittstufe 21 in einem halb ausgefahrenen Zustand, während Fig. 2 die Trittstufe 21 in einem Zustand zeigt, in dem diese vollständig in die Trittkassette 10 eingefahren ist. Dies stellt die Ruhestellung der Trittstufe dar, in welcher die Trittstufe beim Fahren des Fahrzeugs liegen soll.

Die Trittkassette 10 ist in dieser Ausführungsform ebenfalls kastenförmig ausgeformt und weist zwei Seitenwände 11 und 12 und eine Rückwand 13 auf. Ferner ist eine Bodenplatte 14 vorgesehen, welche die Seitenwände 11, 12 und die Rückwand 13 miteinander zu einem kastenförmigen Kassettengehäuse verbindet. Ferner kann eine nicht dargestellte Deckplatte vorhanden sein, welche die Trittkassette 10 oben verschließt. Es kann jedoch auch vorgesehen sein, dass die Oberseite der Trittkassette 10 dadurch verschlossen wird, dass die Trittkassette 10 in ein Fahrzeug eingebaut wird und ein anderes Bauteil des Fahrzeugs die Trittkassette 10 oben abdeckt. Das Gleiche gilt beispielsweise auch für die Bodenplatte 14, die Rückwand 13 oder die Seitenwände 11, 12, die durch Bauteile des Fahrzeugs ersetzt werden können. Die Trittkassette 10 muss daher kein eigenständiges Gehäuse sein, welches in ein Fahrzeug eingebaut wird, sondern die Trittkassette kann sich auch erst durch den Einbau in das Fahrzeug ergeben.

Im Bereich der Vorderseite der Trittstufe 21 ist die Trittkassette 10 jedoch offen ausgebildet, so dass die Trittstufe 21 durch eine vorderseitige Ausschuböffnung 15 ein- und ausgefahren werden kann. Dabei kann diese Seite des Kassettengehäuses 10 durchgehend offen ausgebildet sein, d.h. es ist keinerlei Vorderwand vorhanden. Es kann jedoch auch eine Vorderwand vorhanden sein, die eine Ausschuböffnung aufweist, durch welche die Trittstufe 21 bewegbar ist.

Diese offene Seite der Trittkassette 10, durch welche die Trittstufe 21 ein- und ausfahrbar ist, wird für die vorliegende Erfindung als Vorderseite des Schiebetritts bezeichnet, während die gegenüber liegende Seite im Bereich der Rückwand 13 als Rückseite bezeichnet wird.

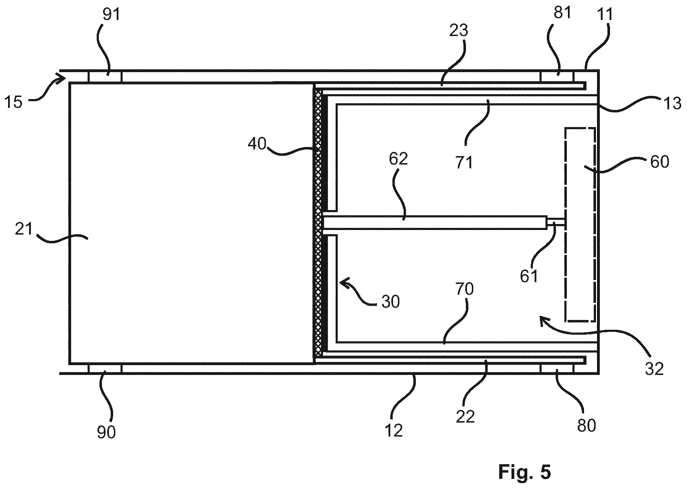

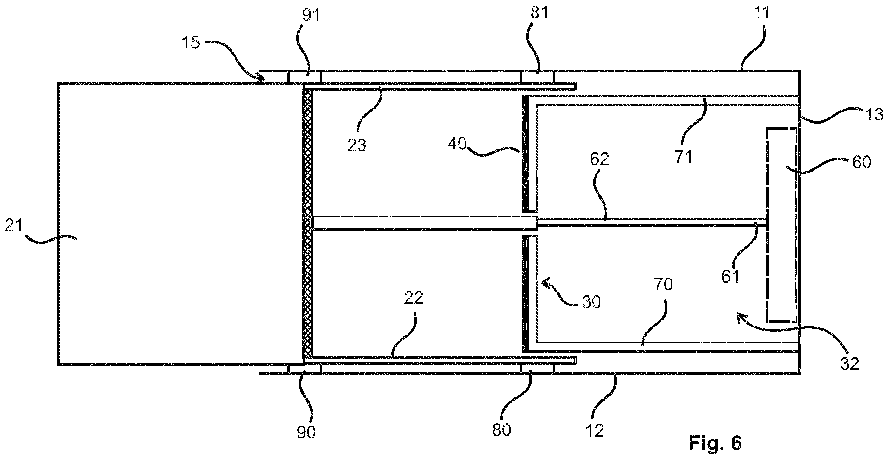

Die Verfahrbarkeit des Ausschubs 20 innerhalb der Trittkassette 10 kann auf verschiedene Arten erreicht werden. Im Ausführungsbeispiel der Figuren 1 und 2 ist der Ausschub 20 beispielsweise über ein Schienensystem beweglich zwischen den Seitenwänden 11, 12 der Trittkassette 10 gelagert. Insbesondere sind an der Trittstufe 21 zwei seitliche Profile 22 und 23 vorgesehen, die zur Rückseite der Trittkassette 10 hin über die Trittstufe 21 hinausragen. Diese beiden Profile 22, 23 sind so ausgebildet, dass sie mit entsprechenden Gegenstücken an den Seitenwänden 11, 12 ein Schienensystem bilden. Beispielsweise können hierzu an den Profilen 22, 23 bzw. an der Trittstufe 21 Rollen angebracht sein, welche in Schienen an den Innenseiten der Seitenwände 11, 12 geführt sind (nicht dargestellt). Alternativ können an den Seitenwänden 11, 12 Rollen angebracht sein, an denen Schienen an den Außenseiten der Profile 22, 23 abrollen. Auch Mischformen beider Führungssysteme sind möglich. Ein mögliches Rollen-Schienen-System wird anhand der Figuren 5 und 6 beschrieben werden.

Der Ausschub 20 ist durch einen in den Figuren 1 und 2 nicht dargestellten Antrieb innerhalb der Trittkassette 10 verfahrbar, wobei wenigstens Teilkomponenten dieses Antriebs innerhalb der Trittkassette 10 angeordnet sind. Der Antrieb steht in Verbindung mit dem Ausschub 20, um diesen zu bewegen, was ebenfalls durch verschiedene Maßnahmen erreicht werden kann. Beispielsweise kann der Antrieb an den seitlichen Profilen 22, 23 angreifen und diese bewegen, wodurch sich die mit den Profilen 22, 23 verbundene Trittstufe 21 ebenfalls bewegt. Der Antrieb kann jedoch auch direkt an der Trittstufe 21 angreifen.

Insbesondere sind wenigstens Teilkomponenten des Antriebs dabei in einem rückseitigen Raum 32 der Trittkassette 10 angeordnet. Dieser rückseitige Raum 32 ist erfindungsgemäß durch eine Trennwand 30 von einem vorderen Raum 31 getrennt, in dem sich die Trittstufe 21 vor und zurück bewegt. Diese Trennwand 30 ist so angeordnet, dass die Rückseite 25 der Trittstufe 21 in der Ruhestellung an der Trennwand 30 anliegt. Dieser Zustand ist der Fig. 2 zu entnehmen, welche die Trittstufe 21 in der Ruhestellung zeigt. In dieser Stellung ist die Trittstufe 21 vollständig in die Trittkassette 10 eingefahren. Je nach Ausführung des Schiebetritts kann natürlich auch vorgesehen sein, dass die Trittstufe 21 in der Ruhestellung immer noch aus der Trittkassette 10 herausragt.

Vorzugsweise liegt die Rückseite 25 der Trittstufe 21 dabei dichtend an der Trennwand 30 an. Dies kann durch entsprechende Dichtungsmittel an der Trittstufe 21 und/oder der Trennwand 30 realisiert werden. Beispielsweise kann die Rückseite 25 der Trittstufe 21 eine Schicht 40 aus einem Dichtmaterial aufweisen. Hierbei kann es sich beispielsweise um eine Gummischicht handeln. Auf der Seite der Trennwand 30, welche der Trittstufe 21 zugewandt ist, kann die Trennwand 30 mit einem entsprechenden Dichtmaterial versehen sein. Auch hierbei kann es sich um eine Gummischicht handeln. Beide Maßnahmen können auch miteinander kombiniert werden.

Die Trennwand 30 kann je nach Ausführung des Ausschubs 20 und des Antriebs für den Ausschub 20 durchgehend ausgeführt sein, so dass sie sich zwischen den beiden Seitenwänden 21, 22 erstreckt. Die Trennwand weist jedoch wenigstens eine Durchbrechung auf, durch welche insbesondere Teile des Antriebs und/oder des Ausschubs geführt sind. In der Ausführungsform der Figuren 1 und 2 sind beispielsweise wenigstens die beiden seitlichen Profile 22, 23 durch die Trennwand 30 geführt, d.h. die Profile können sich in diesem Bereich frei bewegen. Die Trennwand 30 verläuft in dieser Ausführungsform zwischen den beiden Seitenwänden 11, 12, reicht jedoch nicht vollständig an diese heran. Die Trennwand 30 ist dann zwischen der Bodenplatte 14 und einer nicht dargestellten Deckplatte gehalten. Beispielsweise kann sie hierzu aufrecht an der Bodenplatte 14 angebracht sein. Auch eine Anbringung an einer Deckplatte wäre möglich.

Der Spalt zwischen der Trennwand 30 und einem jeweiligen Profil 22, 23 erfordert keine eigene Dichtung, sondern dieser Spalt wird von der Trittstufe 21 geschlossen, wenn diese in der Ruhestellung Kontakt zur Trennwand 30 erhält. Der Spalt zwischen der Trennwand 30 und den Seitenwänden 11, 12, in dem das jeweilige Profil 22, 23 verläuft, kann unter Umständen offen bleiben. In einer alternativen Ausführungsform sind hier Dichtungen vorgesehen, durch welche die Profile verlaufen. Ferner können diese Bereiche durch weitere Trennwände abgetrennt sein. Beispielsweise können zwei weitere Trennwände jeweils von den Enden der Trennwand 30 zur Rückwand 13 verlaufen (nicht dargestellt).

In der Ausführungsform der Figuren 1 und 2 ist eine weitere Durchbrechung 33 in der Trennwand 30 vorgesehen, um das Hindurchführen einer Querstrebe 24 zu ermöglichen, welche die beiden seitlichen Profile 22, 23 miteinander verbindet. Hierbei können ein oder mehrere Querstreben verwendet werden. Damit eine solche Querstrebe 24 beim Ausfahren des Ausschubs 20 nicht durch die Trennwand 30 blockiert wird, kann in der Trennwand 30 ein horizontal verlaufender Schlitz 33 vorgesehen sein. Die Trennwand besteht dann aus einer oberen Teilplatte 30' und einer unteren Teilplatte 30". Der sich bildende Schlitz 33 zwischen diesen beiden Teilplatten 30', 30" ist vorzugsweise gerade so breit, dass sich die Querstrebe 24 hindurch bewegen kann. In der Ruhestellung der Trittstufe 21 gemäß Fig. 2 liegt die Querstrebe 24 im rückseitigen Raum 32. Wird die Trittstufe 21 wie in der Fig. 1 in die Gebrauchsstellung verfahren, bewegt sie sich zwischen den beiden Teilplatten 30', 30" hindurch in den vorderen Raum 31. Fig. 1 zeigt die Querstrebe 24 in dem Moment zwischen den beiden Teilplatten 30', 30".

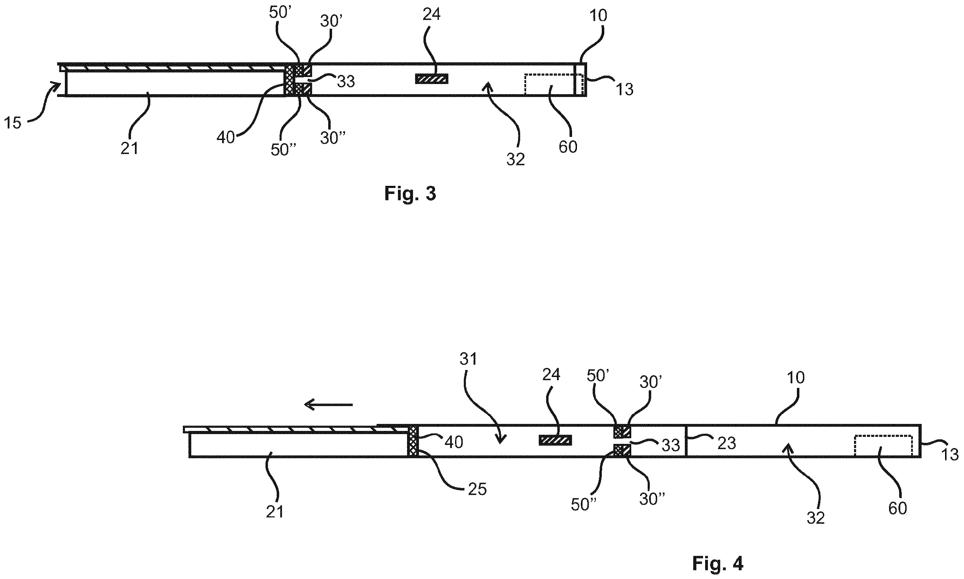

Diese Bewegung einer Querstrebe 24 durch eine Trennwand 30 hindurch ist auch den Figuren 3 und 4 zu entnehmen. Diese zeigen einen schematischen Längsschnitt durch eine Ausführungsform einer Trittkassette 10 mit einer darin verfahrbaren Trittstufe 21. Fig. 3 zeigt die Trittstufe 21 in der Ruhestellung. In dieser Stellung liegt die Rückseite 25 der Trittstufe 21 an der Trennwand an. Dabei wird die Trennwand durch ein obere Teilplatte 30' und eine untere Teilplatte 30" gebildet. Sowohl die Rückseite 25 der Trittstufe 21 als auch die Teilplatten 30', 30" der Trennwand sind in dieser Ausführungsform mit Dichtmaterial versehen. Die Trittstufe 21 weist eine rückseitige Dichtung 40 auf, während die beiden Teilplatten 30', 30" auf ihrer der Trittstufe 21 zugewandten Seite Dichtungen 50' und 50" aufweisen. In der Ruhestellung der Fig. 3 liegen die Dichtungen 40 und 50', 50" aneinander an und dichten so den Schlitz 33 zwischen den beiden Teilplatten 30', 30" ab. Vorzugsweise liegt die Rückseite der Trittstufe 21 dabei mit leichtem Druck an den Teilplatten 30', 30" an.

In dieser Stellung der Trittstufe 21 ist der rückseitige Raum 32 weitestgehend gegenüber der Umgebung abgedichtet. Der Einfluss von Witterungsbedingungen der Umgebung auf einen Antrieb 60 innerhalb dieses rückseitigen Raums 32 ist daher reduziert. So ist der Antrieb 60 insbesondere vor Feuchtigkeit geschützt.

Wird die Trittstufe 21 gemäß der Fig. 4 in Pfeilrichtung in die Gebrauchsstellung verfahren, bewegt sie sich durch die Ausschuböffnung 15 aus der Trittkassette 10 heraus. Hierdurch bewegt sich die Querstrebe 24 in die gleiche Richtung durch den Schlitz 33 in der Trennwand hindurch. So können insbesondere im rückseitigen Endbereich der Profile 22, 23 Querstreben zur Stabilisierung und Erhöhung der Steifigkeit des Ausschubs 20 vorgesehen werden, ohne dass dies einem abgedichteten rückseitigen Raum 32 entgegen steht. Der hierfür erforderliche Schlitz 33 wird in der Ruhestellung der Trittstufe 21 verlässlich durch die Rückwand 25 der Trittstufe 21 verschlossen.

Auch weitere Durchbrechungen innerhalb der Trennwand 30 können durch die Rückseite 25 der Trittstufe 21 dicht verschlossen werden. Beispielsweise ist bei der Ausführungsform eines Schiebetritts gemäß den Figuren 5 und 6 im rückseitigen Raum 32 ein Antrieb 60 angeordnet. Dieser Antrieb 60 weist Antriebsmittel auf, die mit der Trittstufe 21 verbunden ist. Diese Antriebsmittel können beispielsweise durch zwei Antriebsstangen 61 und 62 gebildet werden, die teleskopisch ineinander geschoben sind. So lässt sich die Antriebsstange 61 teleskopisch innerhalb der Antriebsstange 62 verfahren, wobei die Antriebsstange 62 mit der Trittstufe 21 verbunden, während die Antriebsstange 61 mit dem Antrieb 60 verbunden ist. Wird die Antriebsstange 62 ausgefahren, bewegt sie die Trittstufe 21 nach vorne aus der Ausschuböffnung 15 der Trittkassette 10 hinaus in die Gebrauchsstellung. Wird die Antriebsstange 62 hingegen über die Antriebsstange 61 gezogen, bewegt sich die Trittstufe 21 wieder zurück in die Ruhestellung.

Fig. 5 zeigt die Trittstufe 21 in der Ruhestellung. In dieser Stellung liegt die Rückseite der Trittstufe 21 mit einem dichtenden Material 40 an der Trennwand 30 an. Diese Trennwand kann durch eine Platte mit einer mittigen Öffnung gebildet sein, durch welche die Antriebsstange 62 verläuft. Sie kann jedoch auch durch zwei Platten gebildet sein, die im Bereich der Antriebsstange 62 horizontal zueinander beabstandet sind. Beide Arten von Platten weisen jeweils eine Dichtung auf, die mit der Dichtung 40 der Trittstufe 21 zur Anlage kommt. Die Öffnung zwischen den beiden Platten der Trennwand 30 ist somit abgedichtet, wenn die Trittstufe 21 wie in der Fig. 5 an der Trennwand 30 anliegt.

Wird die Trittstufe 21 durch den Antrieb 60 aus der Trittkassette 10 herausgefahren, löst sich diese Dichtung zwar auf und die Durchbrechungen innerhalb der Trennwand 30 liegen offen. Wenn der Schiebetritt entsprechend ausgebildet ist, kann dies jedoch vernachlässigbar sein. Um auch die Seiten des rückseitigen Raums 32 gegenüber der Umgebung abzugrenzen, können optional weitere Seitentrennwände 70 und 71 vorgesehen sein. Diese verlaufen jeweils zwischen den freien Enden der Trennwand 30 und der Rückwand 14. Auf diese Weise gelangen über die Seiten ebenfalls kein Schmutz und keine Feuchtigkeit zu dem Antrieb 60. Für diese zusätzlichen Seitentrennwände 70, 71 ist es vorteilhaft, wenn zwischen den seitlichen Profilen 22, 23 keine Querstreben vorgesehen sind. Für diese könnten ansonsten weitere horizontale Schlitze in den Seitentrennwänden erforderlich sein, um ein oder mehrere Querstreben darin zu führen. Würden diese Schlitze mit Gummi- oder Bürstendichtungen versehen, könnte dies jedoch ebenfalls eine vorteilhafte Ausführungsform darstellen.

Ferner könnte der rückseitige Raum 32 auch auf andere Art gegen die Bereiche der seitlichen Profile 22, 23 abgeschirmt werden. Auch das Rollen-Schienen-System könnte anders ausgeführt sein. In der Ausführungsform der Figuren 5 und 6 ist beispielsweise jeweils eine Rolle 80, 81 am freien Ende jedes Profils 22, 23 angebracht. Diese Rollen 80, 81 sind in nicht dargestellten Schienen auf den Innenseiten der Seitenwände 11 und 12 verfahrbar. Weitere Rollen 90 und 91 sind an anderer Stelle an den Seitenwänden 11, 12 der Trittkassette angebracht. Diese Rollen 90, 91 sind in nicht dargestellten Schienen an der Außenseite des Ausschubs verfahrbar.

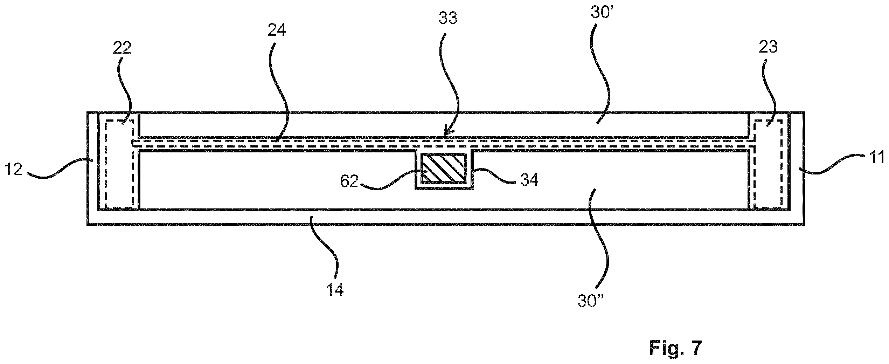

Der Fig. 7 ist von dem rückseitigen Raum aus eine Seitenansicht einer möglichen Form einer Trennwand zu entnehmen, welche neben einem Schlitz 33 zwischen zwei vertikal beabstandeten Teilplatten 30' und 30" auch eine Ausnehmung 34 zur Durchführung beispielsweise einer Antriebsstange 62 aufweist. Die Ausnehmung kann auch als vertikaler Schlitz durch die untere Teilplatte 30" bis zur Bodenplatte 14 verlaufen. So wäre die Trennwand durch drei Teilplatten gebildet. Auch eine Teilung der oberen Teilplatte 30' ist möglich. Durch den Schlitz 33 kann sich eine gestrichelt dargestellte Querstange 24 bewegen, die zwischen zwei seitlichen Profilen 22, 23 angebracht ist. Im Bereich der seitlichen Profile 22, 23 befindet sich ebenfalls keine Trennwand.

### Bezugszeichenliste:

- 10: Trittkassette, Kassettengehäuse
- 11,12: Seitenwand
- 13: Rückwand
- 14: Bodenplatte
- 15: Ausschuböffnung
- 20: Ausschub
- 21: Trittstufe
- 22,23: Profil
- 24: Querstrebe
- 25: Rückseite der Trittstufe
- 30: Trennwand
- 30': Obere Teilplatte
- 30": Untere Teilplatte
- 31: Vorderer Raum
- 32: Rückseitiger Raum
- 33: Durchbrechung, Schlitz
- 34: Ausnehmung
- 40: Dichtung an Trittstufe
- 50',51": Dichtung an Trennwand
- 60: Antrieb
- 61,62: Antriebsstange
- 70,71: Seitentrennwand
- 80,81: Rolle an Ausschub
- 90,91: Rolle an Trittkassette

## Patentansprüche

1. Schiebetritt für ein Fahrzeug, insbesondere für ein Schienenfahrzeug, umfassend eine Trittkassette (10) und einen innerhalb der Trittkassette (10) verfahrbar gelagerten Ausschub (20), wobei der Ausschub (20) wenigstens eine Trittstufe (21) aufweist und zwischen einer Gebrauchsstellung und einer Ruhestellung verfahrbar ist, und die Trittstufe (21) durch eine Ausschuböffnung (15) an einer Vorderseite der Trittkassette (10) in die Gebrauchsstellung verfahrbar ist, und der Innenraum der Trittkassette (10) durch wenigstens eine zwischen gegenüber liegenden Seitenwänden (11;12) verlaufende Trennwand (30) in einen rückseitigen Raum (32) und einen vorderen Raum (31) unterteilt ist, wobei sich die Trittstufe (21) innerhalb des vorderen Raums (31) bewegt, während sich ein Antrieb (60) zur Bewegung des Ausschubs (20) innerhalb des rückseitigen Raums (32) befindet, wobei Antriebsmittel (22;23;61;62) zur Bewegung der Trittstufe (21) durch die Trennwand (30) geführt sind, **dadurch gekennzeichnet, dass** die Trittstufe (21) in der Ruhestellung des Ausschubs (20) an der Trennwand (30) anliegt.

2. Schiebetritt nach Anspruch 1,
**dadurch gekennzeichnet, dass** die Trittstufe (21) in der Ruhestellung des Ausschubs (20) mit ihrer Rückseite (25) an der Trennwand (30) anliegt.

3. Schiebetritt nach Anspruch 2, **dadurch gekennzeichnet, dass** die Rückseite (25) der Trittstufe (21) und/oder die Seite der Trennwand (30), welche der Trittstufe (21) zugewandt ist, wenigstens teilweise mit einem dichtenden Material versehen sind.

4. Schiebetritt nach Anspruch 2 oder 3, **dadurch gekennzeichnet, dass** der Ausschub (20) zwei seitliche Profile (22;23) aufweist, die an ihrer Rückseite (25) von der Trittstufe (21) abstehen, und der Ausschub (20) zwischen einer Gebrauchsstellung und einer Ruhestellung verfahrbar ist, indem die Profile (22;23) an gegenüber liegenden Seitenwänden (11;12) der Trittkassette (10) verfahrbar gelagert sind.

5. Schiebetritt nach Anspruch 4,
**dadurch gekennzeichnet, dass** die seitlichen Profile (22;23) durch die Trennwand (30) geführt sind.

6. Schiebetritt nach Anspruch 5,
**dadurch gekennzeichnet, dass** die seitlichen Profile (22;23) durch wenigstens eine frei liegende Querstrebe (24) miteinander verbunden sind, und die Trennwand (30) eine Durchbrechung (33) aufweist, durch welche die wenigstens eine Querstrebe (24) beim Verfahren des Ausschubs (20) innerhalb der Trittkassette (10) bewegbar ist.

7. Schiebetritt nach Anspruch 6,
**dadurch gekennzeichnet, dass** die Durchbrechung (33) einen rechteckigen Öffnungsquerschnitt hat.

8. Schiebetritt nach einem der Ansprüche 1 bis 7,
**dadurch gekennzeichnet, dass** die Trittstufe (21) wenigstens in einem Bereich an der Trennwand (30) anliegt, in dem Antriebsmittel (22;23;61;62) durch die Trennwand (30) geführt sind und/oder in dem sich die Durchbrechung (33) gemäß Anspruch 6 erstreckt.

9. Schiebetritt nach einem der Ansprüche 1 bis 8,
**dadurch gekennzeichnet, dass** die Trennwand (30) durch wenigstens zwei Teilplatten gebildet wird, die in horizontaler Richtung im Bereich eines Antriebsmittels (61;62) voneinander beabstandet sind.

10. Schiebetritt nach einem der Ansprüche 1 bis 9,
**dadurch gekennzeichnet, dass** der rückseitige Raum (32) in der Ruhestellung des Ausschubs (20) einen zur Umgebung wenigstens annähernd dichten Raum bildet.

11. Schiebetritt nach Anspruch 10,
**dadurch gekennzeichnet, dass** der Schiebetritt eine vormontierte Einheit ist, die in der Ruhestellung des Ausschubs (20) den annähernd dichten, rückseitigen Raum (32) aufweist.

12. Schiebetritt nach Anspruch 10,
**dadurch gekennzeichnet, dass** sich der annähernd dichte, rückseitige Raum (32) in der Ruhestellung des Ausschubs (20) bildet, wenn der Schiebetritt in ein Fahrzeug eingebaut wird.

13. Fahrzeug mit wenigstens einer Tür,
**dadurch gekennzeichnet, dass** unterhalb der Tür ein Schiebetritt gemäß einem der Ansprüche 1 bis 12 angeordnet ist.

## Claims

1. A sliding step for a vehicle, in particular for a rail vehicle, comprising a step housing (10) and an extending portion (20) displaceably mounted within the step housing (10), wherein the extending portion (20) has at least one step tread (21) and is displaceable between a use position and a rest position, and the step tread (21) is displaceable into the use position through an extending portion opening (15) at a front of the step housing (10), and the interior space of the step housing (10) is divided into a rear space (32) and a front space (31) by at least one partition wall (30) extending between opposite side walls (11; 12), wherein the step tread (21) moves within the front space (31) while a drive unit (60) for moving the extending portion (20) is located within the rear space (32),
wherein drive means (22; 23; 61; 62) for moving the step tread (21) are routed through the partition wall (30), **characterized in that** the step tread (21) abuts against the partition wall (30) in the rest position of the extending portion (20).

2. The sliding step according to claim 1,
**characterized in that** the step tread (21) abuts with its rear side (25) against the partition wall (30) in the rest position of the extending portion (20).

3. The sliding step according to claim 2,
**characterized in that** the rear side (25) of the step tread (21) and/or the side of the partition wall (30) facing towards the step tread (21) are at least partially provided with a sealing material.

4. The sliding step according to claim 2 or 3,
**characterized in that** the extending portion (20) has two lateral profiles (22; 23) which protrude from the step tread (21) at its rear side (25), and the extending portion (20) is displaceable between a use position and a rest position by the profiles (22; 23) being displaceably mounted on opposing side walls (11; 12) of the step housing (10).

5. The sliding step according to claim 4,
**characterized in that** the lateral profiles (22; 23) are routed through the partition wall (30).

6. The sliding step according to claim 5,
**characterized in that** the lateral profiles (22; 23) are connected to each other by at least one exposed cross beam (24), and the partition wall (30) has a through-hole (33) through which the at least one cross beam (24) can be moved during the displacement of the extending portion (20) within the step housing (10).

7. The sliding step according to claim 6,
**characterized in that** the through-hole (33) has a rectangular opening cross section.

8. The sliding step according to any one of the claims 1 to 7,
**characterized in that** the step tread (21) abuts against the partition wall (30) at least in a region in which drive means (22; 23; 61; 62) are routed through the partition wall (30) and/or in which the through-hole (33) according to claim 6 extends.

9. The sliding step according to any one of the claims 1 to 8,
**characterized in that** the partition wall (30) is formed by at least two partial plates spaced apart from each other in the horizontal direction in the region of a drive means (61; 62).

10. The sliding step according to any one of the claims 1 to 9, **characterized in that** the rear space (32), in the rest position of the extending portion (20), forms a space that is at least almost tight with respect to the surroundings.

11. The sliding step according to claim 10,
**characterized in that** the sliding step is a pre-assembled unit which, in the rest position of the extending portion (20), includes the almost tight, rear space (32).

12. The sliding step according to claim 10,
**characterized in that** the almost tight, rear space (32) is formed in the rest position of the extending portion (20) when the sliding step is being mounted in a vehicle.

13. A vehicle with at least one door,
**characterized in that** a sliding step according to any one of the claims 1 to 12 is disposed underneath the door.

## Revendications

1. Marchepied coulissant pour un véhicule, en particulier pour un véhicule sur rails, comprenant une cassette de marchepied (10) ainsi qu'un élément télescopique (20) logé à déplacement à l'intérieur de ladite cassette de marchepied (10), dans lequel ledit élément télescopique (20) présente au moins un marchepied (21) et est déplaçable entre une position d'utilisation et une position de repos, et ledit marchepied (21) est déplaçable dans la position d'utilisation à travers une ouverture de sortie (15) située sur une face avant de la cassette de marchepied (10), et l'intérieur de la cassette de marchepied (10) est divisé par au moins une cloison (30) s'étendant entre des parois latérales (11, 12) opposées en un espace arrière (32) et en un espace avant (31), dans lequel ledit marchepied (21) se déplace à l'intérieur de l'espace avant (31), tandis qu'un mécanisme d'entraînement (60) destiné à déplacer ledit élément télescopique (20) se trouve à l'intérieur de l'espace arrière (32), dans lequel les moyens d'entraînement (22; 23; 61; 62) destinés à déplacer le marchepied (21) passent à travers la cloison (30),
**caractérisé par le fait que**, lorsque l'élément télescopique (20) est en position de repos, le marchepied (21) s'applique contre la cloison (30).

2. Marchepied coulissant selon la revendication 1, **caractérisé par le fait que**, lorsque l'élément télescopique (20) est en position de repos, le marchepied (21) s'applique par sa face arrière (25) contre ladite cloison (30).

3. Marchepied coulissant selon la revendication 2, **caractérisé par le fait que** la face arrière (25) du marchepied (21) et/ou la face de la cloison (30), qui montre vers le marchepied (21) sont pourvues au moins en partie d'un matériau servant à étancher.

4. Marchepied coulissant selon la revendication 2 ou 3, **caractérisé par le fait que** ledit élément télescopique (20) présente deux profilés latéraux (22; 23) qui font saillie du marchepied (21) sur la face arrière (25) de celui-ci, et que l'élément télescopique (20) est déplaçable entre une position d'utilisation et une position de repos grâce au fait que lesdits profilés (22; 23) sont logés à déplacement sur des parois latérales (11; 12) opposées de la cassette de marchepied (10).

5. Marchepied coulissant selon la revendication 4, **caractérisé par le fait que** les profilés latéraux (22; 23) passent à travers la cloison (30).

6. Marchepied coulissant selon la revendication 5, **caractérisé par le fait que** les profilés latéraux (22; 23) sont reliés entre eux par au moins une entretoise transversale (24) exposée, et que la cloison (30) présente une percée (33) à travers laquelle ladite au moins une entretoise transversale (24) peut être déplacée lorsque l'élément télescopique (20) est déplacé à l'intérieur de la cassette de marchepied (10).

7. Marchepied coulissant selon la revendication 6, **caractérisé par le fait que** la percée (33) présente une section d'ouverture rectangulaire.

8. Marchepied coulissant selon l'une quelconque des revendications 1 à 7, **caractérisé par le fait que** le marchepied (21) s'applique contre la cloison (30) au moins dans une zone dans laquelle des moyens d'entraînement (22; 23; 61; 62) passent à travers la cloison (30) et/ou dans laquelle s'étend la percée (33) selon la revendication 6.

9. Marchepied coulissant selon l'une quelconque des revendications 1 à 8, **caractérisé par le fait que** la cloison (30) est formée par au moins deux plaques partielles qui sont espacées l'une de l'autre dans la direction horizontale au niveau d'un moyen d'entraînement (61;62).

10. Marchepied coulissant selon l'une quelconque des revendications 1 à 9, **caractérisé par le fait que**, lorsque l'élément télescopique (20) est en position de repos, l'espace arrière (32) forme un espace au moins approximativement étanche par rapport à l'environnement.

11. Marchepied coulissant selon la revendication 10, **caractérisé par le fait que** le marchepied coulissant est une unité pré-montée qui, lorsque l'élément télescopique (20) est en position de repos, présente ledit espace arrière (32) approximativement étanche.

12. Marchepied coulissant selon la revendication 10, **caractérisé par le fait que** l'espace arrière (32) approximativement étanche se forme dans la position de repos de l'élément télescopique (20) lorsque le marchepied coulissant est installé dans un véhicule.

13. Véhicule comprenant au moins une porte, **caractérisé par le fait qu'**un marchepied coulissant selon l'une quelconque des revendications 1 à 12 est disposé au-dessous de la porte.
